# EUROPÄISCHE PATENTSCHRIFT

(11) **EP 0 577 561 B1**
(45) Veröffentlichungstag und Bekanntmachung des Hinweises auf die Patenterteilung: **11.12.1996**
(21) Anmeldenummer: 93810464.3
(22) Anmeldetag: 01.07.1993
(51) Int. Cl.: A47J 31/00, H02J 3/14

(54) **Gerät zum Zubereiten von heissen Getränken**
Apparatus preparing hot beverages
Appareil à préparer des boissons chaudes

(30) Priorität: 01.07.1992 CH 2065/92
(43) Veröffentlichungstag der Anmeldung: 05.01.1994
(73) Patentinhaber: SINTRA HOLDING AG, CH-6210 Sursee (CH)
(72) Erfinder: Lüssi, André, CH-3084 Wabern/BE (CH)
(74) Vertreter: Fischer, Franz Josef

(56) Entgegenhaltungen:
- EP-A- 0 343 383
- EP-A- 0 408 472
- WO-A-91/07898
- DE-A- 3 508 695
- FR-A- 2 568 081
- PATENT ABSTRACTS OF JAPAN, vol. 015, no. 181 (C-0830) 9. Mai 1991 & JP-A-30 45 226 (MATSUSHITA REFRIG CO. LTD.) 26. Februar 1991

## Beschreibung

Die vorliegende Erfindung bezieht sich auf ein Gerät zum Zubereiten von heissen Getränken gemäss dem Oberbegriff des Patentanspruches 1.

Insbesondere bezieht sich die Erfindung auf eine Kaffeemaschine, welche neben der Zubereitung von Kaffee, durch Abgabe von Heisswasser oder Wasserdampf, das Zubereiten oder Aufheizen von anderen Getränken, wie Tee oder Milch, gestattet.

Es sind Kaffeemaschinen auf dem Markt, in denen zwei Heisswasserboiler eingebaut sind. Beide Boiler enthalten je ein Heizelement zum Aufheizen des darin gespeicherten Wassers und je einen Temperaturfühler zum Messen der Wassertemperatur. Jeder der Temperaturfühler liefert je ein Signal an eine Steuervorrichtung, in welcher bei Unterschreitung einer Solltemperatur das Heizelement des entsprechenden Boilers eingeschaltet und bei Erreichen der Solltemperatur wieder ausgeschaltet wird.

Während der erste Boiler mit Heisswasser gefüllt ist, welches zum Zubereiten von Kaffee gebraucht wird, ist der zweite Boiler oftmals nur teilweise mit Heisswasser gefüllt. In diesem Fall wird die Füllmenge mit einem Niveauschalter überwacht und im Restvolumen des zweiten Boilers ist Wasserdampf enthalten. Jedem der Boiler ist kaltes Wasser über je einen Kaltwassereinlass zuführbar. Das heisse Wasser des ersten Boilers ist über einen Heisswasserauslass entnehmbar und einer Brüheinrichtung zum Zubereiten von Kaffee zuführbar. Der zweite Boiler umfasst in der oben dargelegten Ausführung einen Dampfauslass, der oben am Boiler angeordnet ist und zusätzlich einen Heisswasserauslass, der unterhalb des Heisswasserniveaus vorgesehen ist. Ausführungen von Kaffeemaschinen, bei denen der zweite Boiler mit Heisswasser gefüllt ist und nur einen Heisswasserauslass aufweist, oder wo in der oben dargelegten Ausführung nur Dampf aber kein Heisswasser entnehmbar ist, sind ebenfalls erhältlich.

Bei diesen bekannten Kaffeemaschinen ist jedes Heizelement, über entsprechende Schaltmittel gesteuert, parallel an die Netzspannung angeschlossen. Man geht dabei davon aus, dass vom Versorgungsnetz mindestens soviel Leistung abgegeben werden kann, wie die beiden Heizelemente zusammen in Wärme umzusetzen vermögen.

Bei dreiphasigen Versorgungsnetzen ist dies meistens der Fall. Es wird üblicherweise jedes der beiden Heizelemente mit einer getrennten Phase gespiesen.

Bei Einphasennetzen und bei vorhandenen Steckdosen tritt das Problem auf, dass die zur Verfügung stehende Leistung, welche durch die Netzspannung und den abgesicherten Wert des Stromes bestimmt wird, unterhalb der maximalen Leistung liegt, welche zum Versorgen der Kaffeemaschine, bei gleichzeitiger Einschaltung der beiden Heizelemente, notwendig ist. Um ein Durchbrennen der Sicherung zu vermeiden, müssen in diesen Fällen teure Neuinstallationen gemacht werden, trotzdem dass die maximale Leistung von der Kaffeemaschine nur sehr selten aufgenommen wird. Nämlich nur nach dem Einschalten beim Aufheizen des Wassers in den Boilern, oder nur dann, wenn unmittelbar nach einem Kaffeebezug ein Warmwasserbezug oder Dampfbezug folgt oder umgekehrt.

In der WO 91/07898 ist eine Expresso-Kaffeemaschine beschrieben, welche mehrere Lieferstationen für Kaffee und einen Boiler für Heisswasser und Dampf umfasst. An jede Lieferstation für Kaffee wird Kaltwasser zugeführt und mit einem in der Lieferstation eingebauten Heizelement geheizt. In jeder Lieferstation wird die Temperatur des Wassers mit einem Temperaturfühler überwacht. In einer Steuereinrichtung sind Schwellwertschalter vorhanden, die auf die Signale der Temperaturfühler ansprechen und dafür besorgt sind, dass mit zunehmender Wassertemperatur die Heizleistung stufenweise zurückgeschaltet wird. Eine Leistungsschwelle ist ebenfalls in der Steuereinrichtung gespeichert und bewirkt, dass, wenn die Summe aller an die Heizelemente der Lieferstationen und an den Boiler zugeführten Leistungen die Leistungsschwelle übersteigt, der Boiler abgeschaltet wird. Bei ununterbrochener Kaffee-Entnahme wird dadurch das Boilerwasser abkühlen, so dass zwischen Kaffee-Entnahmen kaum mit einer sofortigen Dampf- oder Heisswasserentnahme aus dem Boiler gerechnet werden kann.

Im französischen Dokument FR-A-2 568 081 ist eine Leistungsverteilanordnung, insbesondere für mehrere Backofen, offenbart. Es ist dabei vorgesehen, die elektrische Leistung an die einzelnen Ofen bedarfsgesteuert zu verteilen. Es wird dabei die Abweichung der Ofentemperatur von einem Sollwert überwacht und die jedem Ofen zugeführte elektrische Energie summiert. Wird der Gesamtbedarf an elektrischer Energie zu gross, so werden die einzelnen Ofen zyklisch in einer sequentiellen Folge mit elektrischer Energie versorgt. Es kann dabei vorgesehen sein, dass Ofen, die vorgängig am wenigsten elektrische Energie erhalten haben, mit einer bevorzugten Priorität behandelt werden. Bei übermässigem Energiekonsum ist hier nicht mehr gewährleistet, dass derjenige Ofen, der momentan am meisten elektrische Energie benötigt, auch am meisten Energie erhält.

Auch in der EP-A-0 343 383 ist ein System mit elektrisch beheizten Ofen beschrieben. Dort ist vorgesehen, dass, wenn die zur Verfügung stehende elektrische Leistung nicht ausreicht, nach einem Prioritätsprinzip einige Bezüger selektiv abgeschaltet werden, oder es wird ein Alarmsignal ausgelöst, womit dem Ofenbetreiber angezeigt wird, dass mehr maximale Leistung zur Verfügung gestellt werden sollte.

In der japanischen Veröffentlichung JP-A-30 45 226 ist eine Maschine zum Bezug von Kaffee und Tee beschrieben. Dort wird während einem Kaffeebezug die Heizung für das Teewasser abgeschaltet. Dies hat die gleiche nachteilige Wirkung wie bei dem an erster Stelle gewürdigten Dokument.

Es ist die Aufgabe der vorliegenden Erfindung, bekannte Kaffeemaschinen dahingehend zu verbessern, dass sie auch an Steckdosen mit einer kleineren abgebbaren Leistung angeschlossen werden können, als dies für das gleichzeitige Einschalten aller Heizelemente erforderlich wäre, ohne dass dabei die Vorschaltsicherung überlastet wird. Die genannten teuren Nachinstallationen können dadurch entfallen. Die Anzahl der möglichen Bezüge der unterschiedlichen Getränke pro Zeitperiode soll dadurch kaum eingeschränkt werden.

Diese Aufgabe wird erfindungsgemäss mit einem Gerät zum Zubereiten von heissen Getränken gelöst, das die im kennzeichnenden Teil des Patentanspruches 1 aufgeführten Merkmale aufweist.

Bei der Inbetriebnahme des Gerätes wird die maximal vom Versorgungsnetz abgebbare Anschlussleistung ermittelt und mittels einer Eingabeeinrichtung, die mit der Steuereinrichtung der Maschine verbunden oder verbindbar ist, im Speichermittel der letzteren abgespeichert. Je nachdem, in welcher der Vorrichtungen zum Erhitzen von Wasser ein Bezug stattgefunden hat, wird dieser Vorrichtung höchstens die zur Verfügung stehende Anschlussleistung solange zur Verfügung gestellt, bis das in der Vorrichtung gespeicherte Wasser seine Solltemperatur wieder erreicht hat. Ist die zur Verfügung stehende Anschlussleistung grösser als die von einem der Heizelemente aufnehmbare Heizleistung, so kann die von einem der Heizelemente nicht benötigte Leistung einem anderen Heizelement zugeteilt werden. Es wird dabei ständig überwacht, dass die maximale Anschlussleistung nicht überschritten wird.

Eine solche optimierte Zuteilung der zur Verfügung stehenden Leistung an die einzelnen Vorrichtungen zum Erhitzen von Wasser ermöglicht Getränkebezüge mit einem grösstmöglichen Wirkungsgrad. Unter dem letzteren ist dabei die Anzahl Getränkebezüge in einer Zeitperiode bei einer vorgegebenen verfügbaren Anschlussleistung zu verstehen, wobei die Getränkebezüge ungleichmässig auf die einzelnen Quellen (Kaffee, Heisswasser, Wasserdampf) verteilt sind.

In derjenigen Vorrichtung zum Erhitzen von Wasser, in welcher Wasserdampf aufbereitet wird, beträgt die Solltemperatur des Wassers ca. 130° C. Nachteilig an dieser hohen Temperatur ist, dass Kalk aus dem Wasser ausgefällt wird und sich am Heizelement und an den Innenwandungen der Vorrichtung absetzt. Entsprechende Heizverluste und notwendig werdende Unterhaltsarbeiten sind die Folge davon. Durch die hohe Wassertemperatur entstehen an der genannten Vorrichtung nicht unwesentliche Abstrahlungsverluste. Dies vor allem dann, wenn die Dimensionen der Vorrichtung entsprechend gross sind, was beispielsweise dann der Fall sein kann, wenn die Vorrichtung zur Entnahme von Heisswasser und von Dampf ausgelegt ist. Wenn das Gerät gemäss dem Patentanspruch 4 mit drei Vorrichtungen zum Erhitzen von Wasser ausgerüstet ist, wovon die zweite Vorrichtung lediglich zum Abgeben von Dampf vorgesehen ist, kann die Kalkabsonderung darin gering gehalten werden, weil erfahrungsgemäss der Dampfverbrauch und demzufolge die Kaltwassernachfüllung relativ gering sind.

Durch die Aufteilung des gesamten benötigten Speichervolumens an Heisswasser auf die drei Vorrichtungen kann jede davon ein Heisswasserbehälter mit einem entsprechend kleinen Volumen umfassen. Indem gemäss dem Patentanspruch 5 lediglich in derjenigen Vorrichtung, die zum Aufbereiten von Dampf bestimmt ist, die Wassertemperatur über 100° gehalten wird, sind die Gesamtabstrahlungsverluste vorteilhaft klein.

Die Anzahl der dem Gerät bei einer vorgegebenen Anschlussleistung entnehmbaren Getränkebezüge bei einer nichtlinearen Bezugsverteilung auf die einzelnen Quellen wird umso grösser, wenn die Zuteilung der verfügbaren Heizleistung an die einzelnen Heizelemente der Vorrichtungen gemäss den Patentansprüchen 6 und 7 nicht nur von den absoluten Abweichungen der Wasser-Ist-Temperaturen zu den Sollwert-Temperaturen erfolgt, sondern wenn diese Zuteilung im weiteren noch vom Temperaturgradienten, insbesondere vom Temperaturgefälle, abhängig ist und einer Prioritätsordnung gehorcht.

Dadurch dass die Prioritätsordnung der Anzahl Bezüge in den einzelnen Vorrichtungen anpassbar ist, wie dies im Patentanspruch 8 beansprucht wird, ist eine selbstlernende Ausführung des Gerätes gegeben.

Ist das Gerät mit den Merkmalen gemäss dem Patentanspruch 9 ausgeführt, kann ein Ueberlasten der Heizelemente und/oder ein Uebersteigen der zur Verfügung stehenden Anschlussleistung bei Ueberspannung vermieden werden. Ein wesentlich grösserer zulässiger Spannungsbereich zwischen minimaler Unterspannung und maximaler Ueberspannung kann dadurch erreicht werden.

Weitere vorteilhafte Ausführungsformen des erfindungsgemässen Gerätes sind durch die Merkmale der hier nicht speziell genannten abhängigen Patentansprüche gegeben.

Anhand von Figuren ist die vorliegende Erfindung im folgenden beispielsweise näher beschrieben. Es zeigen
- **Fig. 1**: den Aufbau des erfindungsgemässen Gerätes mit drei Vorrichtungen zum Erhitzen von Wasser in einer schematischen Darstellung,
- **Fig. 2**: ein Blockschaltbild der Steuereinrichtung des erfindungsgemässen Gerätes, und die
- **Fig. 3a bis 3c**: ein Flussdiagramm zum Erklären des Betriebsablaufes des Gerätes.

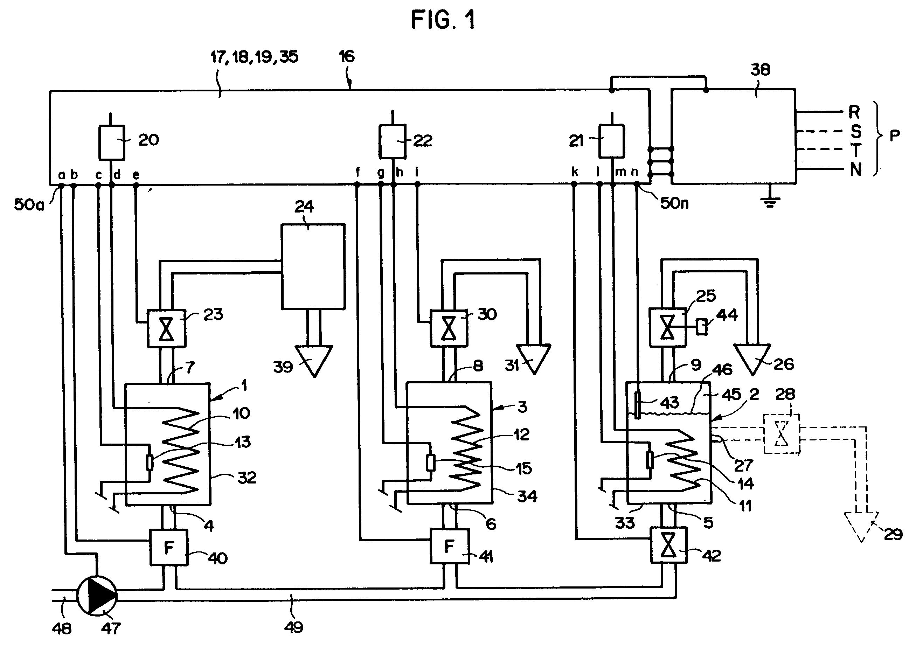

Ein Ausführungsbeispiel eines erfindungsgemässen Gerätes zum Zubereiten von heissen Getränken, eine Kaffeemaschine, ist in der Fig. 1 lediglich schematisch dargestellt. Das Gerät umfasst drei Vorrichtungen 1, 2, 3 zum Erhitzen von Wasser. Jede der Vorrichtungen besteht aus je einem Heisswasserbehälter 32, 33, 34, in welchen je ein Heizelement 10, 11, 12 und je ein Temperaturfühler 13, 14, 15 angeordnet sind. Als Heizelemente werden vorzugsweise elektrische Widerstandsheizelemente verwendet und als Temperaturfühler können beispielsweise NTC-Widerstände eingesetzt werden. An jedem Heisswasserbehälter 32, 33, 34 ist je ein Kaltwassereinlass 4, 5, 6 angeordnet, über welchen der entsprechende Heisswasserbehälter mit kaltem Wasser füllbar bzw. nachfüllbar ist. Der Kaltwassereinlass 4 der ersten Vorrichtung 1 ist über ein erstes Flussmeter 40 mit einer Kaltwasserzubringerleitung 49 verbunden. Der Kaltwassereinlass 5 der zweiten Vorrichtung 2 ist über ein steuerbares Einlassventil 42 mit der genannten Kaltwasserzubringerleitung verbunden. Die letztere speist ebenfalls den Kaltwassereinlass 6 der dritten Vorrichtung über ein zweites Flussmeter 41. Die Kaltwasserzubringerleitung 49 wird ab einem Kaltwasseranschluss 48 über eine Pumpe 47 gespiesen. Der Kaltwasseranschluss 48 kann in einen Wasservorratsbehälter führen. Es ist ebenfalls möglich, den Kaltwasseranschluss direkt mit dem Wasserversorgungsnetz zu verbinden. In diesem Falle kann unter Umständen auf die Pumpe 47 verzichtet werden.

Am ersten Heisswasserbehälter 32 ist ein erster Heisswasserauslass 7 angeordnet, der über ein steuerbares erstes Auslassventil 23 mit einer Brüheinrichtung 24 einer Kaffeemaschine verbunden ist. Der in der Brüheinrichtung zubereitete Kaffee kann über eine Kaffeeabgabedüse 39 der Brüheinrichtung 24 entnommen werden.

Die zweite Vorrichtung 2 ist zum Aufbereiten von Dampf bestimmt. Ihr Heisswasserbehälter 33 ist deshalb nur teilweise mit Wasser gefüllt. Ein im zweiten Heisswasserbehälter 33 eingebauter Füllstandsfühler 43 ist zum Feststellen des vorhandenen Wasserpegels 46 bestimmt. In dem über dem Wasserpegel 46 gelegenen, nicht mit Wasser gefüllten Raum des zweiten Heisswasserbehälters 33 befindet sich der Dampf. Dieser ist über einen Dampfauslass 9, welcher über ein zweites Auslassventil 25 an eine Dampfdüse 26 reicht, entnehmbar. Das zweite Auslassventil 25 ist beispielsweise mittels einem Entnahmeorgan 44, welches ein Handrad sein kann, manuell betätigbar.

Am dritten Heisswasserbehälter 34 der dritten Vorrichtung 3 ist ein zweiter Heisswasserauslass 8 angeordnet, welcher über ein drittes Auslassventil 30 mit einer Düse 31 zum Abgeben von Heisswasser verbunden ist.

Mit dem Bezugszeichen 16 ist eine elektrische Steuereinrichtung dargestellt. Diese umfasst ein Rechenmittel 17, ein erstes Speichermittel 18, ein zweites Speichermittel 19 und ein Netzspannungsmessmittel 35, mit welchem die Netzspannung R, S, T, N, welche einem Netzteil 38 zugeführt wird, gemessen werden kann. Mit 20, 21 und 22 sind erste, zweite und dritte Schaltmittel bezeichnet, welche zum Ein- und Ausschalten der dem ersten, zweiten und dritten der Heizelemente 10, 11, 12 zuführbaren elektrischen Energie bestimmt sind. Es können dazu beispielsweise Relais, Thyristoren oder Triacs verwendet werden.

Ueber elektrische Leitungen 50a bis 50n ist die Steuereinrichtung 16 mit den vorbeschriebenen mechanischen, elektromechanischen oder elektronischen Komponenten verbunden. Die Leitung 50a dient zum Zuführen von elektrischer Energie an die Wasserpumpe 47. Die Leitungen 50d, 50n und 50h sind zum Zuführen der Heizenergie an die Heizelemente 10, 11, 12 vorgesehen. Ueber die Leitungen 50c, 50l und 50g empfängt die Steuereinrichtung 16 Signale von den Temperaturfühlern 13, 14, 15, entsprechend der Wassertemperatur in den Heisswasserbehältern 32, 33, 34. Die Flussmeter 40, 41 geben elektrische Signale, welche einer Durchflussmenge proportional sind, über die Leitungen 50b und 50f an die Steuereinrichtung 16 weiter. Die elektrisch ansteuerbaren Ventile 23, 30, 42 sind über die Leitungen 50e, 50i und 50k an die Steuereinrichtung angeschlossen. Der Füllstandsfühler 43 gibt ein elektrisches Signal entsprechend einem festgestellten Füllstand über die Leitung 50n zur Steuereinrichtung 16. Im Netzteil 38 werden die zum Betrieb der einzelnen Komponenten des Gerätes sowie der elektronischen Steuereinrichtung 16 benötigten Gleich-und Wechselspannungen aufbereitet.

Die Heisswasserbehälter 32, 34 der ersten und dritten Vorrichtung 1, 3 zum Erhitzen von Wasser sind vollständig mit Wasser gefüllt. Dieses wird mit den Heizelementen 10, 12 auf eine Sollwert-Temperatur aufgeheizt, welche in den zweiten Speichermitteln 19 der Steuereinrichtung 16 abgespeichert und festgehalten ist. Mit den Temperaturfühlern 13, 15 wird die Wassertemperatur in den Heisswasserbehältern 32 und 34 dauernd gemessen. Der zeitliche Verlauf der Wassertemperaturen wird in digitalisierter Form (Sampling) ebenfalls in den zweiten Speichermitteln 19 gespeichert. Je nach diesem Verlauf sowie den Abweichungen zu den Sollwert-Temperaturen werden die Schaltmittel 20, 22 zum Zuführen von Heizenergie an die Heizelemente 10 und 12 angesteuert. Die Sollwert-Temperatur des Wassers in den Heisswasserbehältern 32, 34 ist vorzugsweise auf etwa 90° C festgesetzt.

Bei einem Heisswasserbezug aus einem der genannten Heisswasserbehälter 32, 34 wird das zugeordnete Ventil 23, 30 von der Steuereinrichtung angesteuert und geöffnet. Währenddem heisses Wasser entnommen wird, strömt kaltes Wasser über den entsprechenden Kaltwassereinlass 4, 6 der Vorrichtung 1, 3 unter entsprechender Abkühlung des darin gespeicherten Heisswassers zu. Die entnommene Wassermenge entspricht der zugeführten Wassermenge. Die Flussmeter 40, 41 sind dazu bestimmt, nach einer bestimmten entnommenen Wassermenge, welche dem Volumen einer zu füllenden Tasse oder eines zu füllenden Glases entspricht, das geöffnete Ventil 23 oder 30 wieder zu schliessen.

In der zweiten, zum Aufbereiten von Dampf bestimmten Vorrichtung 2, wird bei Dampfbezügen erst Wasser in den dritten Heisswasserbehälter 33 nachgefüllt, wenn der Wasserpegel 46 unterhalb des Füllstandsfühlers 43 abgesunken ist. Dieser Zustand wird vom letzteren der Steuereinrichtung gemeldet, welche ihrerseits dann das Einlassventil 42 ansteuert, wodurch Wasser in den dritten Heisswasserbehälter unter Abkühlung des darin befindlichen restlichen Heisswassers nachgefüllt wird, solange, bis der Füllstandsfühler 43 den richtigen Sollpegel der Steuereinrichtung 16 meldet.

Der zeitliche Wassertemperaturverlauf des in der zweiten Vorrichtung gespeicherten Wassers wird ebenfalls in digitalisierter Form in den zweiten Speichermitteln 19 festgehalten. Die Sollwert-Temperatur des Heisswassers in der zweiten Vorrichtung 2 ist vorzugsweise auf ca. 130° C festgesetzt.

Im gezeigten Ausführungsbeispiel sind drei Entnahmequellen vorhanden. Nämlich die Kaffeeabgabedüse 39, die Düse 31 zum Abgeben von Heisswasser, insbesondere zum Aufbrühen von Tee, und die Dampfdüse 26 zum Entnehmen von Wasserdampf, insbesondere zum Aufheizen von kalten Getränken wie Milch, oder aber zum Vorwärmen von Tassen oder Gläsern.

In einem weiteren Ausführungsbeispiel eines erfindungsgemässen Gerätes könnte lediglich die erste und die zweite Vorrichtung 1, 2 eingebaut sein. Die zweite Vorrichtung wäre dann zusätzlich mit einem Heisswasserauslass 27 versehen, welcher am zweiten Heisswasserbehälter 33 unterhalb des Wasserpegels 46 angeordnet und über ein Ventil 28 mit einer Düse zum Abgeben von Heisswasser 29 verbunden wäre. Eine solche Anordnung ist in der Fig. 1 gestrichelt gezeichnet. Ein Flussmeter zum Feststellen der entnommenen Heisswassermenge könnte in diesem Fall auf der Heisswasserseite in Serie zum Ventil 28 angeordnet sein. Der zweite Heisswasserbehälter 33 müsste in diesem Fall entsprechend grösser dimensioniert werden. Die in der Beschreibungseinleitung genannten, nachteiligen Folgen würden dadurch entstehen.

Die vorliegende Erfindung ist an Kaffeemaschinen mit mindestens zwei Vorrichtungen zum Erhitzen von Wasser sinnvoll anwendbar. In einer dritten Ausführungsform könnten deshalb auch nur die erste und die dritte der genannten Vorrichtungen vorgesehen sein.

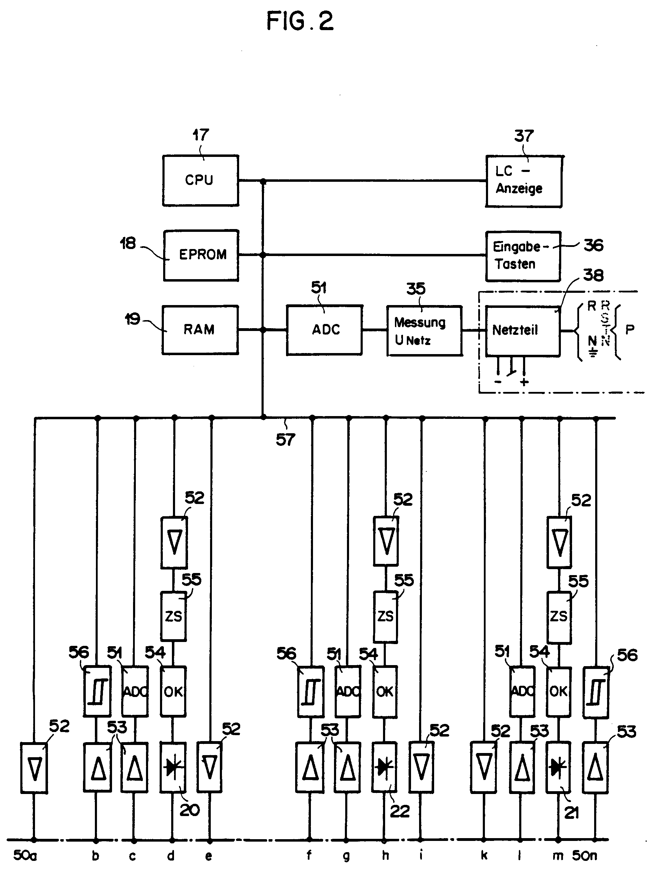

In der Fig. 2 ist die Steuereinrichtung 16 und der Netzteil 38 als Blockschaltbild dargestellt. Der Netzteil 38 ist so ausgelegt, dass daran entweder eine Einphasenspannung R, N oder eine Dreiphasenspannung R, S, T, N angeschlossen werden kann. Jeder Netzanschluss ist dabei befähigt, einen der Vorsicherung entsprechenden maximalen Strom abzugeben.

Der Netzteil 38 ist zum Aufbereiten der zum Betrieb des erfindungsgemässen Gerätes notwendigen Wechsel- und/oder Gleichspannungen bestimmt.

In der Steuereinrichtung 16 ist, wie bereits gesagt, ein Rechenmittel 17, ein erstes Speichermittel 18 und ein zweites Speichermittel 19 vorhanden. Das Rechenmittel 17 ist dabei ein Mikroprozessor in einer bekannten Ausführung. Das erste Speichermittel 18 ist ein EPROM in welchem das Programm zum Betreiben des Gerätes gespeichert ist, und das zweite Speichermittel 19 ist ein RAM, in welchem Initialisierungsdaten, wie die Sollwert-Temperaturen des Wassers der einzelnen Heisswasserbehälter, der Wert der zur Verfügung stehenden elektrischen Anschlussleistung, vorgegebene entnehmbare Wassermengen zum Füllen von Tassen und/oder Gläsern, usw., sowie Betriebsdaten, d.h. während dem Betrieb des Gerätes gemessene und periodisch digitalisierte Daten, wie die zeitlichen Verläufe der Heisswassertemperaturen und die mit den Netzspannungsmessmitteln 35 gemessenen Netzspannungen etc. gespeichert sind.

Die zweiten Speichermittel 19 oder ein Teil davon können batteriegestützt sein, so dass insbesondere die Initialdaten beim Abschalten des Gerätes oder bei einem Stromunterbruch nicht verlorengehen.

Analoge Messwerte, wie die Wassertemperaturen in den Heisswasserbehältern und die Netzspannungen, werden, wie bereits gesagt, periodisch in digitalisierter Form abgespeichert. Dazu ist je ein Analog/Digital-Konverter 51 vorzusehen.

Jedes von der Steuereinrichtung 16 an eine der Leitungen 50a, 50e, 50i und 50k abgegebene elektrische Signal ist je über eine Ausgangstrennstufe 52 oder über einen Ausgangsverstärker geschaltet. In ähnlicher Weise ist jedes der der Steuereinrichtung 16 über die Leitungen 50b, 50c, 50f, 50g, 50l und 50n zugeführte Signal über eine Eingangstrennstufe 53 oder über einen Eingangsverstärker geschaltet.

Die von den Flussmetern 40, 41 sowie vom Füllstandsfühler 43 ankommenden Leitungen 50b, 50f und 50n weisen nach ihrem zugeordneten Eingangsverstärker 53 je einen Impulsformer oder Schwellwertschalter 56 auf.

Zum Ansteuern der Schaltmittel 20, 21, 22, welche vorzugsweise Thyristoren oder Triacs sind, ist je ein Optokoppler 54 vorgesehen, welcher je mit einem Nulldurchgangsschalter 55 verbunden ist. Die letzteren dienen dazu, die elektronischen Schaltmittel 20, 21, 22 zum Vermeiden von Störspannungserzeugungen bei einem Nulldurchgang der Wechselspannung oder des Wechselstromes zu schalten. Die entsprechenden Schaltsignale enthalten die Nulldurchgangsschalter 55 über Ausgangstrennstufen 52 vom Rechenmittel 17.

Die einzelnen Komponenten der Steuereinrichtung 16 sind in bekannter Weise mittels einer oder mehreren BUS-Anordnungen 57 zusammengeschaltet.

In der in der Fig. 2 dargestellten Schaltung ist je eine Pulspaketsteuerung für die Schaltmittel 20, 21 und 22 enthalten. Zur Leistungsregelung werden den einzelnen Heizelementen, die Heizenergie benötigen, eine bestimmte Anzahl Perioden aus dem vollen Wellenzug der Netzwechselspannung gesandt. Soll bei einem Heizelement nur die Hälte der maximal von ihm aufnehmbaren Heizleistung zugeführt werden, kann das mit der gezeigten Steuereinrichtung so realisiert werden, dass beispielsweise in zyklischer Folge während fünf Perioden der Netzwechselspannung das entsprechende Schaltmittel eingeschaltet und während den nächsten fünf Perioden ausgeschaltet ist. Die Technik der Pulspaketsteuerung kann der einschlägigen Fachliteratur entnommen werden. Es wäre ebensogut denkbar, anstelle der gezeigten Pulspaketsteuerung eine Phasenanschnittsteuerung zu verwenden. Entsprechende Entstörmittel müssten zusätzlich vorgesehen werden.

Die Netzspannungsmessmittel 35 dienen dazu, die Netzspannung dauernd zu messen und die Pulspaketsteuerung der Schaltmittel so zu beeinflussen, dass Netzspannungsschwankungen keinen Einfluss auf die Heizleistung hat. Die Heizelemente und die Pulspaketsteuerung sind dazu so ausgelegt, dass bei der festgelegten minimalen Unterspannung und bei 100 % angeschalteter Netzspannung die volle Heizleistung vom Heizelement aufnehmbar ist. Je grösser die Netzspannung bis zu einer maximalen Ueberspannung wird, umsomehr Wellenzüge werden ausgelassen. Es wird auf diese Weise erreicht, dass das Gerät bei der minimalen Netzspannung noch einwandfrei arbeitet und dass keine Ueberlastung der Heizelemente und/oder der dem Gerät vorgeschalteten Sicherung bei der maximalen Ueberspannung auftritt.

Mittels einer Eingabeeinrichtung 36, im gezeigten Ausführungsbeispiel Eingabetasten, die an einem Bedienungspanel angeordnet sind, können beispielsweise nach dem Eingeben eines Codewortes die vorgenannten Initialdaten eingegeben und im RAM-Speicher 19 abgespeichert werden. Im normalen Betrieb können die Eingabetasten dazu benutzt werden, um beispielsweise die Getränkeart, wie Kaffee, Espresso, Tee, etc. zu bestimmen. Eine Ausgabeeinheit 37, im gezeigten Ausführungsbeispiel eine LC-Anzeige, kann dazu vorgesehen werden, um Meldungen, wie Störungsmeldungen, Bedienungsmeldungen, Bereitschafts-oder Nichtbereitschaftsmeldungen usw., auszugeben bzw. anzuzeigen.

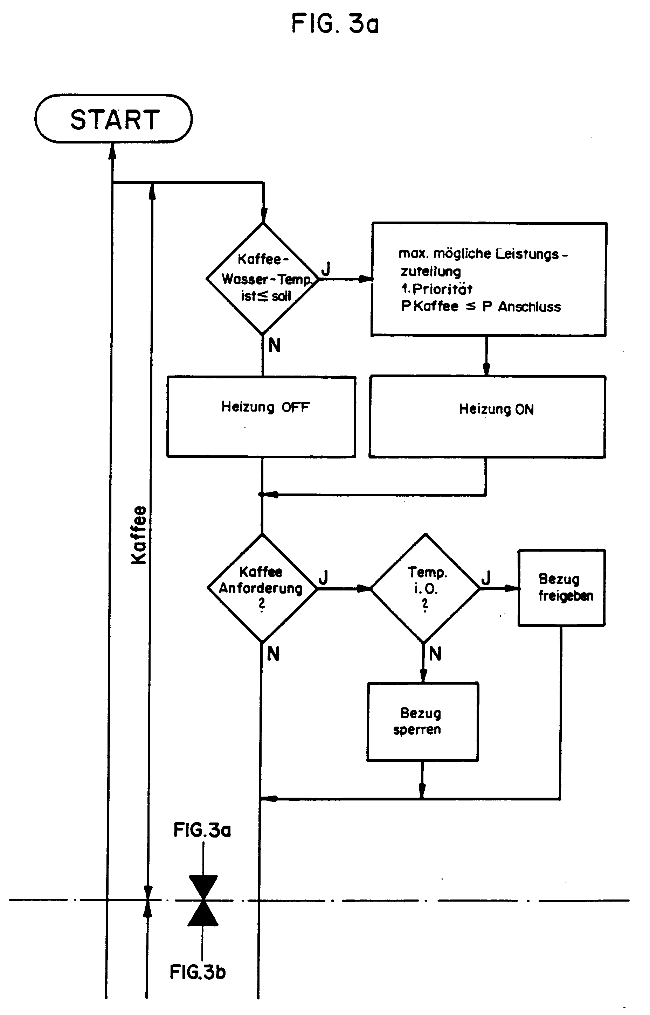

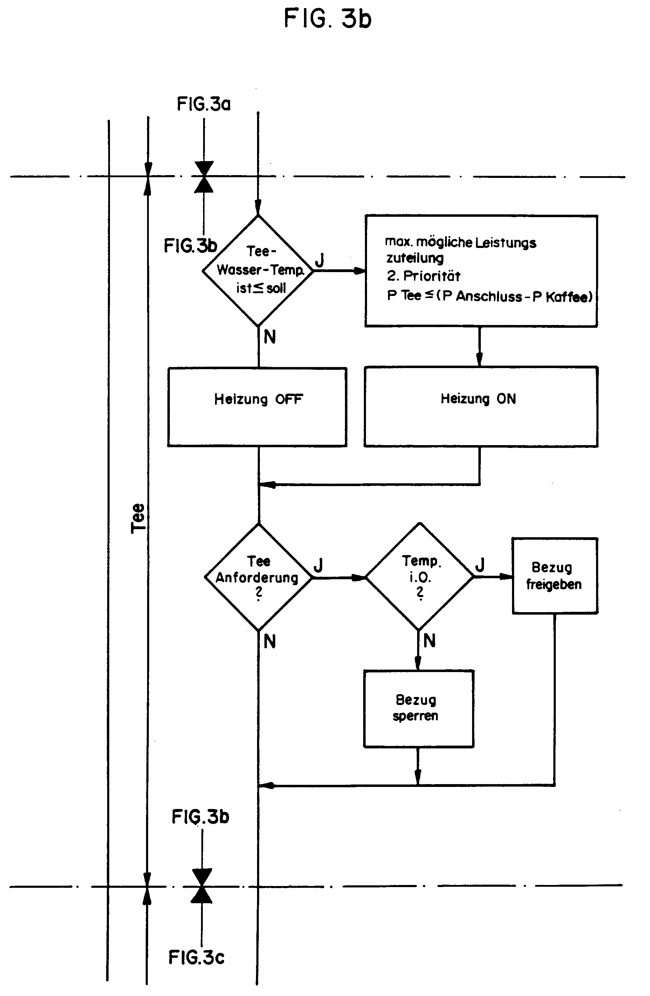

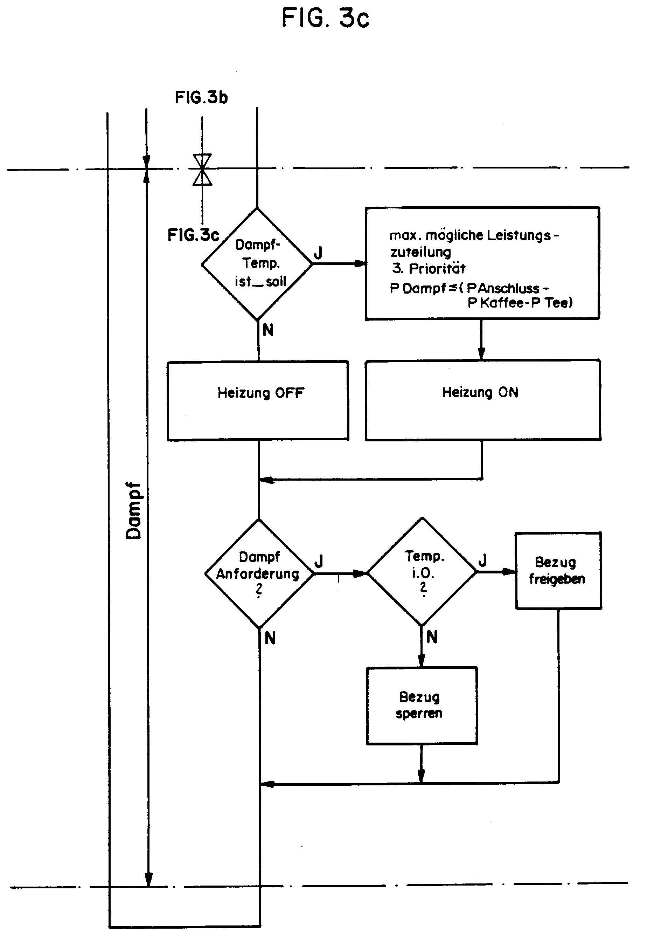

Im folgenden soll der Betrieb des erfindungsgemässen Gerätes näher beschrieben werden. Dies kann gemäss dem Flussdiagramm, welches in den Fig. 3a, 3b und 3c gezeigt ist, geschehen.

Nehmen wir an, dass beim Einschalten der Kaffeemaschine die Heisswasserbehälter bereits Wasser enthalten, das aufgeheizt werden muss. Aus dem Flussdiagramm in der Fig. 3a ist ersichtlich, dass, weil die Frage, ob die Kaffeewassertemperatur kleiner ist als der festgelegte Sollwert, mit Ja beantwortet werden kann, das Heizelement des ersten Heisswasserbehälters die maximal mögliche Leistungszuteilung erfährt. Wenn die maximale Anschlussleistung kleiner oder gleich ist wie die durch das Heizelement des ersten Heisswasserbehälters aufnehmbare Leistung, wird die volle zur Verfügung stehende Leistung diesem Heizelement zugeschaltet. Im Falle einer zu kleinen Anschlussleistung erfolgt dies pulspaketweise. Ein Kaffeebezug ist noch nicht möglich, weil die Solltemperatur des Wassers im ersten Heisswasserbehälter noch nicht erreicht ist. Wenn die zur Verfügung stehende Anschlussleistung grösser ist als die vom Heizelement des ersten Heisswasserbehälters maximal aufnehmbare Leistung, dann kann dieser Ueberschuss an Leistung dem Heizelement der dritten Vorrichtung zum Abgeben von Heisswasser zur Verfügung gestellt werden (Fig. 3b). Das gleiche gilt für das Heizelement der Vorrichtung zum Aufbereiten von Dampf gemäss der Fig. 3c. Dieses kann im gezeigten Beispiel nur dann eingeschaltet werden, wenn nach dem Einschalten des Heizelementes für das Kaffeewasser und des Heizelementes für das andere Heisswasser noch verfügbare Anschlussleistung übrig bleibt. Dies ist praktisch nur in einem Dreiphasennetz der Fall, wo jedes Heizelement an eine Phase geschaltet ist. In einem Einphasennetz ist in dem Falle, wo die verfügbare Anschlussleistung kleiner oder gleich der von einem der Heizelemente aufnehmbaren Leistung ist, immer nur eines der Heizelemente eingeschaltet. Die Pulspaketsteuerung der Steuereinrichtung sorgt dafür, dass der maximal mögliche Wert der Anschlussleistung nicht überschritten wird. Dies ist beispielsweise dann der Fall, wenn ein Heizelement bei einer Anschlussspannung von 220 V eine Leistung von 3 kW aufnimmt, jedoch nur eine Steckdose mit 220 V Spannung und einem abgesicherten Wert von 10 Ampere zur Verfügung steht. Uebersteigt in einem Einphasennetz die verfügbare Anschlussleistung die Nennleistung eines einzelnen Heizelementes, so können je nach verfügbarer Anschlussleistung mehrere der Heizelemente gleichzeitig voll und/oder teilweise eingeschaltet sein.

Mit den in den Heisswasserbehältern angeordneten Temperaturfühlern kann festgestellt werden, wenn ein Bezug an Heisswasser oder Dampf stattfindet. Dies durch eine entsprechende Abkühlung des in den Heisswasserbehältern gespeicherten Wassers. Aufgrund dieser Feststellung ist es möglich, Heizleistung demjenigen Heizelement in einer der vorgängig beschriebenen Arten zuzuführen, aus dessen zugeordnetem Heisswasserbehälter ein Bezug stattgefunden hat.

Im erwähnten Flussdiagramm ist weiterhin ersichtlich, dass zum Steuern der einzelnen Heizelemente die von den Temperaturfühlern gemessenen Wassertemperaturen durch die Rechenmittel zyklisch abgefragt werden. Je nachdem, wie stark die Ist-Temperatur von der in den Speichermitteln gespeicherten Sollwert-Temperatur abweicht, kann Heizleistung dem einen und/oder anderen Heizelement zugeschaltet werden. Indem die zyklisch gemessenen Wassertemperaturen in digitalisierter Form im zweiten Speichermittel gespeichert sind, kann der zeitliche Verlauf der Wassertemperatur durch das Rechenmittel ermittelt werden. Insbesondere ist die Grösse eines Temperaturgefälles bei einem Bezug oder der Temperaturanstieg bei eingeschaltetem Heizelement errechenbar. Die zur Verfügung stehende Anschlussleistung kann nun einerseits in Abhängigkeit der absoluten Temperaturdifferenz zwischen der Ist-Temperatur und der Sollwert-Temperatur des Wassers und andererseits in Funktion der Grösse eines Temperaturgradienten, insbesondere eines Temperaturgefälles, einem oder mehreren der Heizelemente zugeschaltet werden.

Im weiteren ist vorgesehen, dass die Zuteilung von Heizleistung an die einzelnen Heizelemente einer Prioritätsordnung gehorcht. Es kann vorgesehen sein, dass die Prioritäten den einzelnen Heizelementen fest zugeordnet sind, wobei, da erfahrungsgemäss am meisten Kaffee, dann Heisswasser und zum Schluss Dampf bezogen wird, die erste Priorität dem Heizelement im Heisswasserbehälter zum Zubereiten von Kaffee, die zweite Priorität dem Heizelement im Heisswasserbehälter zum Zubereiten von heissem Wasser, beispielsweise zum Aufbrühen von Tee, und die dritte Priorität dem Heizelement im Heisswasserbehälter zum Erzeugen von Dampf zugeordnet sind.

Die Prioritätsordnung kann auch variabel gestaltet werden. So kann vorgesehen sein, dass in einer ersten Priorität dasjenige Heizelement Heizleistung erhält, in dessen zugeordnetem Heisswasserbehälter das grösste Temperaturgefälle ermittelt worden ist und erst in einer zweiten Priorität die Heizelemente der Heisswasserbehälter Heizleistung erhalten, bei denen lediglich eine Unterschreitung der Sollwert-Temperatur festgestellt worden ist. Insbesondere wird auf diese Weise Heizleistung an dasjenige Heizelement abgegeben, bei dessen Heisswasserbehälter unmittelbar ein Bezug stattgefunden hat.

In einer weiteren Ausführung ist es denkbar, die Anzahl Bezüge ab den verschiedenen Quellen in einer Zeitperiode zu ermitteln, indem jeder mit dem entsprechenden Temperaturfühler anhand eines Temperaturgefälles festgestellte Bezug in dem zweiten Speichermittel, beispielsweise durch Inkrementieren eines Zählers, festgehalten wird. Nach einer gewissen Zeitperiode kann durch die Rechenmittel die Quelle mit den meisten Bezügen ermittelt werden. Aufgrund dieser ermittelten Werte kann dem Heizelement desjenigen Heisswasserbehälters mit den meisten Bezügen die erste Priorität und den Heizelementen der anderen Heisswasserbehälter entsprechend eine tiefere Priorität zugeordnet werden. Das Gerät ist sozusagen selbstlernend. Je nach Gestaltung und Auslegung des Softwareprogrammes kann die eine oder die andere der vorgängig aufgeführten Varianten oder eine Kombination davon gewählt werden. Dies beispielsweise durch eine entsprechende Betätigung der Eingabetasten nach der Eingabe eines Codewortes.

Wie bereits gesagt, kann die Getränkeanforderung durch Betätigen einer der Eingabetasten erfolgen. Wie aus dem Flussdiagramm ersichtlich ist, sind in der Steuereinrichtung softwaremässig Sperrmittel vorgesehen, welche einen Bezug von einer der Quellen (Kaffee, Heisswasser oder Dampf) erst dann gestatten, wenn die Heisswassertemperatur mindestens den Sollwert aufweist.

## Patentansprüche

1. Gerät zum Zubereiten von heissen Getränken,
- mit mindestens zwei Heisswasserboilern (1, 2, 3) mit je einem elektrischen Heizelement (10, 11, 12), je einem Temperaturfühler (13, 14, 15) und je einem Kaltwassereinlass (4, 5, 6),
- mit einem Heisswasserauslass (7) für den ersten Boiler (1) und einem Auslass (9) für Dampf und/oder mit einem weiteren Auslass (27) für Heisswasser für den zweiten Boiler (2),
- mit einer Steuereinrichtung (16) mit Rechenmitteln (17), Speichermitteln (18, 19) und Mitteln (20, 21, 22) zum Steuern der den Heizelementen zuführbaren elektrischen Energie in Abhängigkeit der in den Boilern gemessenen Wassertemperaturen, wobei ein Wert für die elektrische Leistung und Solltemperaturvorgaben für das Heisswasser in den Boilern (1, 2, 3) in den Speichermitteln (19) gespeichert sind, die von den Temperaturfühlern in den Boilern gemessenen Wassertemperaturen von der Steuereinrichtung (16) abfragbar sind, und in den Rechenmitteln (17) Abweichungen zu den Sollwerttemperaturen ermittelbar sind,
dadurch gekennzeichnet,
- dass der gespeicherte Wert für die elektrische Leistung, der dem Gerät zur Verfügung stehenden maximalen elektrischen Anschlussleistung entspricht,
- dass mit den Rechenmitteln (17) aus einer für jeden Boiler gemessenen Folge von Wassertemperaturen der Temperaturgradient ermittelbar ist,
- dass die Steuermittel (20, 21, 22) derart gesteuert sind, dass höchstens eine dem gespeicherten Leistungswert entsprechende elektrische Leistung allen Heizelementen gemeinsam zuführbar ist,
- dass, auch wenn der momentane Leistungsbedarf grösser ist, als der gespeicherte Leistungswert, ein aufgrund einer festgestellten Sollwertabweichung oder eines festgestellten Temperaturgefälles mit elektrischer Leistung versorgtes Heizelement elektrische Leistung solange erhält, bis die Solltemperatur in dessen Boiler erreicht ist, der Rest der allenfalls noch zur Verfügung stehenden elektrischen Leistung den anderen Heizelementen zugeteilt ist, und
- dass die Steuereinrichtung(16) Sperrmittel aufweist, womit nach einer Getränkeanforderung der Bezug eines Getränkes erst dann freigegeben ist, wenn die Wassertemperatur im entsprechenden Boiler (1, 2, 3) etwa gleich der Solltemperatur ist.

2. Gerät nach Anspruch 1, dadurch gekennzeichnet, dass der Heisswasserauslass (7) im ersten Boiler (1) über ein erstes Ventil (23) mit einer Brüheinrichtung (24) zum Herstellen von Kaffee verbunden ist und dass der Dampfauslass (9) des zweiten Boilers (2) über ein zweites Ventil (25) mit einer Düse (26) zum Abgeben von Wasserdampf verbunden ist.

3. Gerät nach Anspruch 1 oder 2, dadurch gekennzeichnet, dass der Heisswasserauslass (7) des ersten Boilers (1) über ein erstes Ventil (23) mit einer Brüheinrichtung (24) zum Herstellen von Kaffee verbunden ist und dass der weitere Heisswasserauslass (27) des zweiten Boilers (2) über ein weiteres Ventil (28) mit einer weiteren Düse (29) zum Abgeben von Wasser, insbesondere zum Aufbrühen von Tee, verbunden ist.

4. Gerät nach Anspruch 2, dadurch gekennzeichnet, dass ein dritter Boiler (3) vorhanden ist, wobei der Auslass des dritten Boilers ein Heisswasserauslass (8) ist und über ein drittes Ventil (30) mit einer weiteren Düse (31) zum Abgeben von Wasser, insbesondere zum Aufbrühen von Tee, verbunden ist.

5. Gerät nach Anspruch 4, dadurch gekennzeichnet, dass jeder der Boiler (1, 2, 3) einen Heisswasserbehälter (32, 33, 34) umfasst, dass die Ein- und Auslässe (4, 5, 6; 7, 8, 9) je am Behälter angeordnet sind, dass das Wasser in den Behältern (32, 34) mit nur einem Heisswasserauslass (7, 8) auf höchstens 100° C aufgeheizt ist und dass lediglich im Behälter (33) mit dem Dampfauslass (9) das darin gespeicherte Wasser eine höhere Temperatur aufweist.

6. Gerät nach einem der Ansprüche 1 bis 5, dadurch gekennzeichnet, dass jedem Boiler (1, 2, 3) ein Mittel zum Feststellen eines Heisswasser- und/oder Dampfbezuges zugeordnet ist, wobei die Feststellmittel vorzugsweise durch die Temperaturfühler (13, 14, 15) gebildet sind und dass die Mittel (20, 21, 22) zum Steuern der Heizelemente in Abhängigkeit der Feststellmittel steuerbar sind.

7. Gerät nach einem der Ansprüche 1 bis 6, dadurch gekennzeichnet, dass die Zuteilung von Heizleistung an die Heizelemente (10, 11, 12) der einzelnen Boiler (1, 2, 3) einer Prioritätsordnung gehorcht, wobei in einer ersten Priorität das Heizelement desjenigen Boilers Heizleistung erhält, bei welchem das grösste Temperaturgefälle ermittelt worden ist und erst in einer zweiten Priorität die Heizelemente der Boiler Heizleistung erhalten, bei denen lediglich Temperaturabweichungen feststellbar sind.

8. Gerät nach Anspruch 7, dadurch gekennzeichnet, dass die Anzahl Heisswasser- oder Dampfbezüge aus den einzelnen Boilern über eine gewisse Zeitperiode summierbar und in den Speichermitteln (19) speicherbar sind und dass die Prioritätsordnung der Anzahl Bezüge aus den einzelnen Boilern anpassbar ist.

9. Gerät nach einem der Ansprüche 1 bis 8, dadurch gekennzeichnet, dass die Steuereinrichtung (16) Mittel (35) zum Messen der Netzspannung aufweist und dass die Mittel (20, 21, 22) zum Steuern der Heizelemente (10, 11, 12) in Abhängigkeit der Netzspannung steuerbar sind.

10. Gerät nach einem der Ansprüche 1 bis 9, dadurch gekennzeichnet, dass die Anschlussleistung sowohl einem 3-Phasen-Netz (R, S, T) als auch einem 1-Phasen-Netz (R, N) entnehmbar ist.

11. Gerät nach einem der Ansprüche 1 bis 10, dadurch gekennzeichnet, dass die Mittel (20, 21, 22) zum Steuern der Heizelemente Mittel zum An- oder Abschalten der Heizelemente, insbesondere Relais, Thyristoren und/oder Triacs sind, wobei die beiden letzteren phasenanschnittgesteuert oder pulspaketgesteuert sind.

## Claims

1. Device for the preparation of hot drinks,
- with at least two hot water boilers (1, 2, 3) each with an electrical heating element (10, 11, 12) and each with a temperature sensor (13, 14, 15), and each with a cold water inlet (4, 5, 6),
- with a hot water outlet (7) for the first boiler (1) and an outlet (9) for steam and/or a further outlet (27) for hot water for the second boiler (2),
- with a control mechanism (16) with computational means (17), memory means (18, 19) and means (20, 21, 22) to control the electrical energy suppliable to the heating elements depending upon the water temperatures measured in the boilers, a value for the electrical power and data on desired temperature for the hot water in the boilers (1, 2, 3) being stored in the memory means (19), the water temperatures measured in the boilers by the temperature sensors being able to be called up by the control mechanism (16), and deviations from the desired temperatures being determinable in the computational means (17)
characterized in that
- the stored value for the electrical power corresponds to the maximum connected electrical power available to the appliance,
- using the computational means (17) the temperature gradient can be determined from a sequence of water temperatures measured for each boiler,
- the control means (20, 21, 22) are controlled in such a way that at most electrical power corresponding to the stored power value is suppliable collectively to all heating elements,
- even when the present power need is greater than the stored power value, a heating element receives electrical power based on a determined value deviation or a determined temperature drop until the desired temperature in its boiler is reached, any remaining available electrical power being distributed to the other heating elements, and
- the control mechanism (16) has blocking means whereby after a drink has been ordered, the supply of a drink is released only when the water temperature in the corresponding boiler (1, 2, 3) is about the same as the desired temperature.

2. Device according to claim 1, characterized in that the hot water outlet (7) in the first boiler (1) is connected via a first valve (23) to a brewing device (24) to produce coffee and in that the steam outlet (9) of the second boiler (2) is connected to a jet (26) via a second valve (25) to release steam.

3. Device according to claim 1 or 2, characterized in that the hot water outlet (7) of the first boiler (1) is connected via a first valve (23) to a brewing device (24) to produce coffee and in that the further hot water outlet (27) of the second boiler (2) is connected via a further valve (28) to a further jet (29) to release water, in particular to brew tea.

4. Device according to claim 2, characterized in that a third boiler (3) is provided, the outlet of the third boiler being a hot water outlet (8) and being connected via a third valve (30) to a further jet (31) to release water, in particular to brew tea.

5. Device according to claim 4, characterized in that each of the boilers (1, 2, 3) includes a hot water tank (32, 33, 34), in that the inlets and outlets (4, 5, 6; 7, 8, 9) are each disposed on the tank, in that the water in the tanks (32, 34) having a hot water outlet only (7, 8) is heated up to at most 100°C and in that only the water stored in the tank (33) with the steam outlet (9) has a higher temperature.

6. Device according to one of the claims 1 to 5, characterized in that a means of detecting a supply of hot water an/or steam are attached to each of the boilers (1, 2, 3), the detection means being formed preferably by the temperature sensors (13, 14, 15) and in that the means (20, 21, 22) to control the heating elements depending upon the detection means are controllable.

7. Device according to one of the claims 1 to 6, characterized in that the apportioning of heating capacity to the heating elements (10, 11, 12) of the individual boilers (1, 2, 3) follows an order of priority, whreby as a first priority the heating element of the boiler in which the greatest temperature drop is ascertained receives heating capacity, and only as a second priority the heating elements of the boilers in which only temperature deviations are detectable are given heating capacity.

8. Device according to claim 7, characterized in that the number of hot water or steam supplies from the individual boilers can be added up over a certain period of time and can be stored in the memory means (19) and in that the order of priority of the number of supplies from the individual boilers can be adjusted.

9. Device according to one of the claims 1 to 8, characterized in that the control mechanism (16) has means (35) to measure the supply voltage and in that the means (20, 21, 22) to control the heating elements (10, 11, 12) depending upon the supply voltage are controllable.

10. Device according to one of the claims 1 to 9, characterized in that the power can be taken from a three-phase power mains (R, S, T) as well as from a one-phase power mains (R, N).

11. Device according to one of the claims 1 to 10, characterized in that the means (20, 21, 22) to control the heating elements are means of switching on or off the heating elements, in particular relays, thyristors, and/or triacs, the last two being phase-controlled or controlled in such a way that they are cyclically passable only for a certain number of periods of the a.c. voltage supply.

## Revendications

1. Appareil pour la préparation de boissons chaudes,
- avec au moins deux ballons d'eau chaude (1,2,3) ayant chacun un élément de chauffage (10,11,12), ayant chacun une sonde de température (13,14,15) et ayant chacun une entrée d'eau froide (4,5,6),
- avec une sortie d'eau chaude (7) sur le premier ballon (1) et une sortie (9) de vapeur et/ou une autre sortie (27) d'eau chaude sur le deuxième ballon (2),
- avec une unité de commande (16) avec des moyens de calcul (17), des moyens de mémoire (18,19) et des moyens (20,21,22) pour commander la transmission d'énergie électrique aux éléments de chauffage selon la température de l'eau mesurée dans les ballons, une valeur de charge électrique et de température limite de l'eau chaude dans les ballons (1,2,3) étant mémorisée dans les moyens de mémoire (19), les températures d'eau mesurées dans les ballons par les sondes de température étant interrogeables par l'unité de commande (16), des divergences par rapport aux températures limites étant détectées par les moyens de calcul,
caractérisé en ce que
- la valeur mémorisée de la charge électrique correspond à la charge d'alimentation constante maximum de connexion de l'appareil,
- en ce que le gradient de température de chaque ballon est détecté par les moyens de calcul (17) à partir d'une suite de températures d'eau mesurée,
- en ce que les moyens de commande (20,21,22) sont commandés de telle manière que au plus, l'une des valeurs de charge enregistrée correspondant à la charge électrique de tous les éléments de chauffage ensemble peut être conduite,
- en ce que aussi lorsque le besoin momentané de charge est plus grand que la valeur de charge mémorisée, un élément de chauffage, alimenté par une charge électrique, reçoit durant ce temps une charge électrique en raison d'une divergence de valeur limitée déterminée ou d'une chute de température déterminée, jusqu'à ce que la valeur limite de température de ce ballon soit atteinte, le reste de l'éventuelle charge électrique encore à disposition étant réparti entre les autres éléments de chauffage,
- et en ce que l'unité de commande (16) comprend des moyens d'arrêt, tels qu'après une demande de boisson, la délivrance d'une boisson ne peut être seulement libérée que lorsque la température de l'eau dans le ballon correspondant (1,2,3) est environ égale à la température limite.

2. Appareil selon la revendication 1, caractérisé en ce que la sortie d'eau chaude (7) du premier ballon (1) est reliée à un dispositif d'échauffement (24) pour obtenir du café, par une première soupape (23) et en ce que la sortie de vapeur (9) du deuxième ballon (2) est reliée à une buse (26) de fourniture de vapeur d'eau par une deuxième soupape (25).

3. Appareil selon l'une des revendications 1 ou 2, caractérisé en ce que la sortie d'eau chaude (7) du premier ballon (1) est reliée à un dispositif d'échauffement (24) pour obtenir du café, par une première soupape (23), et en ce que la sortie d'eau chaude suivante (27) du deuxième ballon (2) est reliée à une buse suivante (29) pour délivrer de l'eau, en particulier pour préparer du thé, par une autre soupape (28).

4. Appareil selon la revendication 2, caractérisé en ce qu'il comprend un troisième ballon (3), la sortie du troisième ballon étant une sortie d'eau chaude (8), reliée à une autre buse (31) pour délivrer de l'eau, en particulier pour préparer du thé, par une troisième soupape (30).

5. Appareil selon la revendication 4, caractérisé en ce que chacun des ballons (1,2,3) comprend un réservoir d'eau chaude (32,33,34), en ce que les entrées et sorties (4,5,6,7,8,9) sont chacune disposées sur les réservoirs, en ce que l'eau dans les réservoirs (32,34) est chauffée à seulement 100°C à la sortie d'eau (7,8), et en ce que uniquement dans le réservoir (33) avec la sortie de vapeur (9), l'eau emmagasinée a une température supérieure.

6. Appareil selon l'une des revendications 1 à 5, caractérisé en ce que chaque ballon comprend un moyen pour déterminer une fourniture d'eau chaude et/ou de vapeur, les moyens de détermination étant formés de préférence par les sondes de température (13,14,15), et en ce que les moyens (20,21,22) pour commander les éléments de chauffage peuvent être commandées selon les moyens de détermination.

7. Appareil selon l'une des revendications 1 à 6, caractérisé en ce que la répartition de la charge de chauffage aux éléments de chauffage (10,11,12) de chaque ballon (1,2,3) répond à un ordre de priorité, selon une première priorité l'élément de chauffage recevant une charge de chauffage est celui du ballon dans lequel la plus grande baisse de température a été détectée et selon une deuxième priorité, les éléments de chauffage recevant une charge de chauffage étant ceux des ballons dans lesquels seulement des variations de température sont détectées.

8. Appareil selon la revendication 7, caractérisé en ce que le nombre de demandes d'eau chaude ou de vapeur de chaque ballon durant une période déterminée est calculé et mémorisable dans les moyens de mémoire (19), et en ce que l'ordre de priorité de chaque ballon peut être adapté selon le nombre de demandes.

9. Appareil selon l'une des revendications 1 à 8, caractérisé en ce que les moyens de commande (16) comprennent des moyens (35) de mesure de la tension d'alimentation du réseau et en ce que les moyens (20,21,22) de commande des éléments de chauffage (10,11,12) sont commandables selon la tension du réseau.

10. Appareil selon l'une des revendications 1 à 9, caractérisé en ce que la connexion au réseau peut se faire aussi bien sur un réseau triphasé (R,S,T) que sur un réseau monophasé (R,N).

11. Appareil selon l'une des revendications 1 à 10, caractérisé en ce que les moyens (20,21,22) pour commander les éléments de chauffage sont des moyens pour enclencher ou déclencher les éléments de chauffage, en particulier des relais, des thyristors et/ou des triacs, les deux derniers étant commandés en coupure de phase ou en paquet d'impulsions.
